Europäisches Patentamt

European Patent Office

Office européen des brevets

(11) Publication number: **0 129 927**
A1

## (12) EUROPEAN PATENT APPLICATION

(21) Application number: **84200846.8**

(22) Date of filing: **13.06.84**

(51) Int. Cl.⁴: **B 60 T 17/08**
**B 61 H 5/00, F 16 F 1/32**

(30) Priority: **16.06.83 SE 8303448**

(43) Date of publication of application:
**02.01.85 Bulletin 85/1**

(84) Designated Contracting States:
**DE FR GB IT**

(71) Applicant: **SAB NIFE AB**
**Box 515**
**S-261 24 Landskrona(SE)**

(72) Inventor: **Emilsson, Fred Sören**
**Villa Solhem Stora Slägarp**
**S-231 00 Trelleborg(SE)**

(74) Representative: **Petri, Stellan**
**c/o SAB NIFE AB Box 515**
**S-261 24 Landskrona(SE)**

(54) A brake actuator.

(57) A brake actuator, preferably for a rail vehicle, has a piston
(10) movable under the influence of belleville springs (16),
counteracted by fluid pressure at the opposite side of the
piston for releasing the brakes.

In order to obtain a compact design with high and even
force output each belleville spring (16), having a degressive
spring characteristic curve, is made to work only in the part of
said curve where the force is at its maximum and is comparatively constant during a comparatively large deflection of the
spring.

Fig.1

EP 0 129 927 A1

Croydon Printing Company Ltd.

# A BRAKE ACTUATOR

### Technical Field

This invention relates to a brake actuator, preferably for a rail vehicle, including a piston axially movable in a housing under theinfluence of a number of belleville springs, arranged in series and counteracted by fluid pressure at the opposite side of the piston for releasing the brakes.

### Technical Background

In brake actuators, where the brake force is supplied by one or more springs, the helically wound spring type is most commonly used. However, a number of stacked belleville springs have also been utilized in some instances.

Each such belleville spring has a progressive or straight spring characteristic curve, and the number of springs is comparatively great in order to obtain the required brake force and piston travel distance.

### The Invention

In some instances, due for example to the particular design of the brake arrangement, the required piston travel distance can be kept rather small, and in such a case it is important to have a force output which is as high and even as possible from the springs.

This is according to the invention attained in that each belleville spring, having a degressive spring characteristic curve, is made to work only in the portion of said curve where the force is at or close to its maximum and is comparatively constant during a comparatively large deflection of the spring.

Not only will hereby the above stated objectives be obtained, but also - due to the fact that the spring dimensioning stress curve is degressive - a possibility to utilize smaller springs. The life of the spring depending on the span between maximal and minimal stress increases, and a greater deflection may be permitted.

In order to minimize the dimension of the spring stack in the axial direction each spring has a large outer diameter, whereas the number of springs is low.

Due to the degressive spring characteristic curve and based on the fact that the spring stack is dependant on the behaviour of each belleville spring it is important to prevent the individual spring from collapsing. This may according to the invention be attained in that between some neighbouring springs, preferably between every second spring, there is a support ring.

## Brief Description of the Drawing

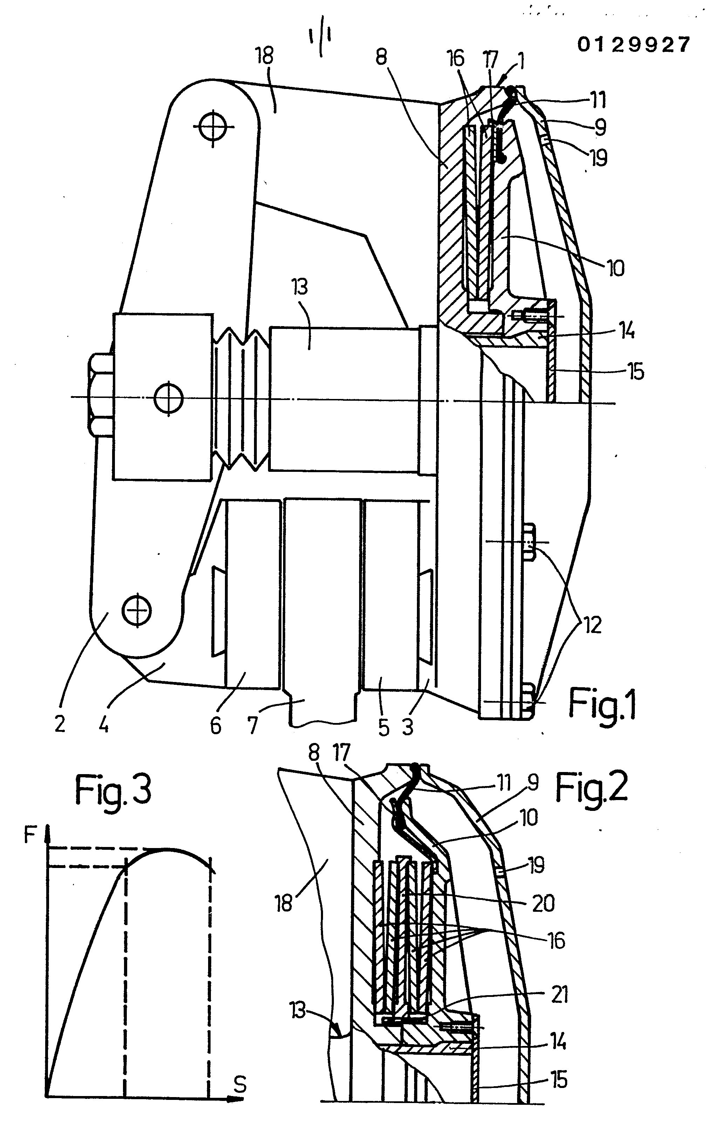

The invention will be described in further detail below reference being made to the accompanying drawing, in which Fig. 1 is a partly sectional top view of a rail vehicle disc brake arrangement incorporating the invention, Fig. 2 is a view similar to Fig. 1 of a part of a modified embodiment of the invention, and Fig. 3 is a graph illustrating a typical spring characteristic curve for a belleville spring used.

## Detailed Description of Preferred Embodiments

A disc brake arrangement, in which the invention may be included primarily consists of only a few parts: a unit 1 (to be described below), a brake lever 2 pivotally attached thereto, and pad holders 3, 4 with brake pads 5, 6. The whole arrangement is to be suspended in any conventional way from a rail vehicle underframe or bogie in the vicinity of a disc 7 to be braked.

A brake cylinder is formed of a cylinder housing 8, which has a bolted-on lid 9, and a piston 10. An annular diaphragm 11 is attached to the piston 10 (in a way to be described) and is clamped between the housing 8 and the lid 9 by screw joints 12.

A conventional slack adjuster 13 of pulling type is directly connected to the piston rod 14 for the piston 10. Its housing is preferably integral with the cylinder housing 8.

A plate 15 is sealingly attached to the piston 10 over the piston rod 14 for providing a closed compartment for brake fluid to the right of the piston 10 in Fig. 1.

Two belleville springs 16 are arranged between the housing 8 and the piston 10; they are in Fig. 1 shown in their completely compressed condition. A clamp ring 17 is arranged as shown at the diaphragm 11 so as to keep the latter securely in place by means of the spring force.

The cylinder housing 8 is provided with a first brake pad holder 3 having a replaceable brake pad 5 and with a bracket 18.

The parts 3, 5 and 8-18 together form the unit 1.

The brake lever 2 is at one end pivotally attached to the bracket 18 and at its opposite end provided with a pivotal second brake pad holder 4 having a replaceable brake pad 6. The slack adjuster 13 is pivotally connected to the brake lever 2 at an intermediate point.

It is evident that at the admission of brake fluid (air under pressure) through an inlet 19, the piston 10 and the slack adjuster mechanism will be forced to the left in the clock-wise direction for lifting the pads from the disc 7 or in other words for releasing the brake.

Conversely, if the pressure to the right of the piston 10 is lowered, the piston will be forced to the right by the belleville springs 17 applying the brake under the influence of these springs. It is thus evident that the arrangement is of the so called inverse spring brake type.

A slightly different version of the arrangement according to Fig. 1 is shown in Fig. 2. The difference resides mainly in the belleville spring part, and accordingly only that part of the arrangement is shown. Even if some of the members vary slightly from the Fig. 1 version, the same numerals are used for corresponding members.

In this Fig. 2 version there are not only two, but four belleville springs 16′ arranged in two groups as shown with a support ring 20 inbetween with a function to be described. A guide sleeve 21 for the support ring may be arranged on the piston 10 as shown and is preferably made of a plastic material.

Due to the special over-all arrangement of the disc brake, the piston 10 need only move a limited distance between its positions for fully applied and fully released brake, which also means that one prerequisite for accomplising a minimization of the space requirement, especially in the axial dimension, is fulfilled.

In order to obtain the required force with a minimal number of belleville springs 16, each such spring is used in such a way that its spring characteristic curve is optimally utilized. This is illustrated in Fig. 3, showing a spring characteristic curve for a belleville spring used according to the invention, i.e. the force $F$ from the spring as a function of the deflection $s$ of the spring. It appears that this curve is degressive, i.e. the spring force rises rapidly in the beginning but then the force increase diminishes, and before the spring collapses the force even declines somewhat.

The essence of the invention lies in that only the comparatively flat part of the spring characteristic curve, especially marked in Fig. 3 with a thicker line, is utilized giving a comparatively low variation of the spring force over its entire work area and also a high force.

The function of the support ring 20 is to prevent the individual springs in the stack to collapse, and such a support ring may preferably be inserted between every second spring in the stack. In this way every single spring has a limited deflection not only determined by the total travel of the piston.

It is important to note that, although the invention is exemplified as being used in a pulling disc brake arrangement, it is equally useful in pushing disc brake arrangements as well as in tread brake arrangements.

CLAIMS:

1. A brake actuator, preferably for a rail vehicle, including a piston (10) axially movable in a housing (8) under the influence of a number of belleville springs (16, 16'), arranged in series and counteracted by fluid pressure at the opposite side of the piston for releasing the brakes, characterized in that each belleville spring (16, 16'), having a degressive spring characteristic curve, is made to work only in the portion of said curve where the force is at or close to its maximum and is comparatively constant during a comparatively large deflection of the spring.

2. A brake actuator according to claim 1, characterized in that each spring (16, 16') has a large outer diameter and that the number of springs is low.

3. A brake actuator according to claim 1, characterized in that between some neighbouring springs (16') there is a support ring (20) preventing one or more of the springs to collapse.

---------------

Fig.1

Fig.3

Fig.2

0129927

European Patent Office

**EUROPEAN SEARCH REPORT**

EP 84 20 0846

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 274 476 (GENERAL SIGNAL) * page 11, line 15 - page 12, line 13; figure 3 * | 1,2,3 | B 60 T 17/08 B 61 H 5/00 F 16 F 1/32 |
| Y | US-A-2 325 193 (NUTT) * page 2, line 40 - page 4, line 12; figure 17 * | 1 | |
| Y | GB-A- 841 332 (BERGEN) * page 2, lines 23-79; page 3, line 127 - page 4, line 36; figures 8,9,15 * | 2,3 | |
| A | US-A-3 557 913 (RUSSLER) | | |

TECHNICAL FIELDS SEARCHED (Int. Cl. ³)

B 60 T 17/08
B 60 T 17/10
B 60 T 13/22
B 60 T 13/38
B 60 T 13/50
B 61 H 5/00
F 16 D 59/02
F 16 D 65/16
F 16 D 65/14
F 16 F 1/32
F 16 F 1/34

The present search report has been drawn up for all claims

| Place of search | Date of completion of the search | Examiner |
|---|---|---|
| THE HAGUE | 24-09-1984 | HARTEVELD C.D.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82